# EUROPÄISCHE PATENTSCHRIFT

(11) **EP 2 858 922 B1**
(45) Veröffentlichungstag und Bekanntmachung des Hinweises auf die Patenterteilung: **24.08.2016**
(21) Anmeldenummer: 13728115.0
(22) Anmeldetag: 05.06.2013
(51) Int. Cl.: B65D 85/804

(54) **REINIGERKAPSEL**
CLEANING CAPSULE
CAPSULE DE PRODUIT DE NETTOYAGE

(30) Priorität: 06.06.2012 DE 102012011204
(43) Veröffentlichungstag der Anmeldung: 15.04.2015
(73) Patentinhaber: Aquis Wasser-Luft-Systeme GmbH Lindau, Zweigniederlassung Rebstein, 9445 Rebstein (CH)
(72) Erfinder: HEITELE, Bernd, CH-9437 Marbach (CH)
(74) Vertreter: Otten, Roth, Dobler & Partner mbB Patentanwälte
(86) Internationale Anmeldenummer: PCT/EP2013/001641
(87) Internationale Veröffentlichungsnummer: WO 2013/182299

(56) Entgegenhaltungen:
- EP-A1- 2 604 547
- WO-A1-2012/019902

## Beschreibung

Die vorliegende Erfindung betrifft einen Behälter mit Reinigungsmittel für Getränkemaschinen gemäß Anspruch 1 sowie ein Verfahren zur Reinigung von Getränkemaschinen nach Anspruch 18.

Stand der Technik:

Zur Bereitung von Getränken sind Getränkemaschinen, insb. Kaffeemaschine bekannt, in denen Einwegbehälter oder Einwegverpackungen , z. B. in Form von Kapseln, sog. Getränkekapseln, gefüllt mit Kaffee, Tee, Schokolade, Milch bzw. Milchpulver, Aromen, Konzentraten oder anderen Getränkegrundstoffen verwendet werden. Diese Maschinen werden beispielsweise als Kapselsysteme bezeichnet.

Diese Einwegbehälter werden in die sogenannte Kapselsysteme eingeführt und mit Wasser oder einer wässrigen Lösung durchströmt, der Inhalt dabei extrahiert oder gelöst und als Fertiggetränk ausgegeben.

Ein Problem bei den herkömmlichen Kapselsystemen besteht darin, dass die Behälteraufnahme bzw. Kapselaufnahme sowie die Ausgabekanäle und getränkberührenden Räume der Maschine aufgrund ihrer meist verwinkelten Geometrie mit der Zeit verschmutzen.

Die flüssigkeitsberührenden Räume der Kapselsysteme müssen daher regelmässig mit einer Reinigungslösung gespült werden. Dies geschieht bei diesen Getränkemaschinen mit Wassertank beispielsweise dadurch, dass der Wassertank mit einer Reinigungsflüssigkeit befüllt oder im Wasser des Tanks ein Reinigungsmittel gelöst wird und dann der Inhalt des Tanks über die Kapselaufnahme und über die Ausgabekanäle für das Getränk gepumpt wird. Bei einfachen Maschinen wird die Reinigungsflüssigkeit i.d.R. durch wiederholtes Drücken der Bezugstaste durch die Maschine hindurchgepumpt. Anschliessend ist es erforderlich den Tank zu spülen, um Reinigerreste zu entfernen. Der Tank wird dazu i.d.R. erneut mit Frischwasser befüllt und dieses dann durch die Maschine gepumpt.

Diese Reinigungsprozedur ist jedoch arbeitsaufwendig und die freie Hantierung mit Reinigungsmittel oder Reinigungsflüssigkeit bei Kontakt nicht ungefährlich für den Anwender. Dazu kommt, dass die Ausspülung der Reinigungsflüssigkeit über die gesamte Hydraulik der Maschine hohe Mengen an Spülwasser benötigt und fehleranfällig ist.

Die WO 2012/019902 A1 offenbart eine Vorrichtung, ein System und ein Verfahren zur Aufbereitung von Getränken mittels einer Kapsel, wobei zur Reinigung der Getränkemaschine die Verwendung einer mit Reinigungs- und/oder Entkalkungsmittel befüllte Kapsel vorgeschlagen wird. Die nachveröffentlichte EP 2 604 547 A1 offenbart eine Kapsel zur Entkalkung einer Getränkeaufbereitungsmaschine mit einem Fluiddicht im Kapselinneren zwischen einer Bodenfolie, der Seitenwandung des Kapselkörpers und einer Deckelfolie eingeschlossenem Entkalkungsmittel.

Der vorliegenden Erfindung liegt daher die Aufgabe zugrunde, diesen Stand der Technik zu verbessern.

Zur Lösung dieser Aufgabe werden ein Behälter gemäß Anspruch 1 und ein Verfahren nach Anspruch 18 vorgeschlagen. Weitere zweckmäßige Ausführungen sind in den abhängigen Ansprüchen angegeben.

Erfindungsgemäss wird deshalb vorgeschlagen, einen Reinigungsbehälter, beispielsweise eine Reinigungskapsel bereitzustellen, welche ein separates bzw. freies Einbringen von Reinigungsmittel als Flüssigkeit oder als wasserlöslichen Feststoff in den Kapselautomaten, beispielsweise in den Tank des Kapselautomaten erübrigt.

Hierzu wird erfindungsgemäss vorgeschlagen einen Behälter, beispielweise eine Kapsel zu verwenden, welcher es erlaubt, den Innenraum der Behälteraufnahme bzw. Kapselaufnahme und/oder die Ausgabekanäle der Maschine mit Reinigungsflüssigkeit zu benetzen und von Rückständen zu reinigen.

Um eine vollständige Benetzung der Behälteraufnahme bzw. Kapselaufnahme zu gewährleisten hat der Reinigungsbehälter bzw. die Reinigungskapsel gegenüber der Getränkekapsel, z.B. Kaffeekapsel, einen geringeren Aussendurchmesser, beispielsweise bedingt durch eine stärkere Konizität. Am Aussendurchmesser und/oder im Bodenbereich des Behälters bzw. der Kapsel sind Löcher angebracht, welche es erlauben, dass Reinigungsflüssigkeit (Reinigungsmittel vermischt mit Wasser oder Heisswasser) ausfliesst und bevorzugt unter Druck herausspritzt. Die Löcher haben bevorzugt einen Durchmesser von 0.2 bis 0.6 mm und bevorzugt sind 3 bis 20 Löcher am Umfang und 1 bis 8 Löcher am Boden angebracht.

Als Reiniger denkbar sind flüssige Reinigungsmittel, granulierte Reinigungsmittel, Reinigungstabletten, Reinigungsschäume und andere denkbare Zustandsformen und Kombinationen von Reinigungsmitteln. Für eine ausreichende Lagerfähigkeit und Lagerstabilität des Reinigungsbehälters bzw. der Reinigungskapsel und um einen direkten Kontakt zwischen dem Verbraucher und dem Reinigungsmittel zu verhindern, kann das Reinigungsmittel, unabhängig von einer flüssigen oder festen Zustandsform, innerhalb des Reinigungsbehälters dicht eingeschlossen werden. Hierbei wird unter einem dichten Einschluss ein mindestens austrittsfreier Einschluss des Reinigungsmittels im Behälter bzw. in der Kapsel verstanden. Bei Einsatz von flüssigen Reinigungsmitteln wird mindestens ein flüssigkeitsdichter und /oder dampfdichter Einschluss des Reinigungsmittels verstanden.

Hierzu kann das Reinigungsmittel zwischen einer ersten und zweiten Folie eingeschlossen, z. B. eingeschweisst werden. Die erste Folie wird zunächst beispielsweise durch einen Tiefziehprozess ausgeformt, so dass eine Vertiefung bzw. Ausstülpung für die Aufnahme des Reinigungsmittels entsteht. Diese tiefgezogene Folie wird in bevorzugter Weise mit dem Behälter- bzw. Kapselkörper am oberen Rand verbunden. Dies kann durch ein Heissprägeverfahren, durch Ultraschallverschweissung, durch Verklebung oder ähnliches geschehen. Im Anschluss wird die Vertiefung mit Reiniger gefüllt und mit einer zweite Folie bevorzugt weitgehend planen Folie abgeschlossen. Die zweite Folie kann beispielsweise durch thermisches Verschweissen (Heissprägeverfahren), Ultraschall oder ähnliches aufgebracht werden. Statt einer Folie sind auch Kunststoffspritzgussteile und/oder Tiefziehteile, metallkaschierte Folien und/oder andere Verschlussmedien oder Kombinationen hieraus denkbar. Im Folgenden werden alle Arten von Verschlussmedien mit Folie bezeichnet.

Ein Ausführungsbeispiel wird nachfolgend anhand einer Figur erläutert.

Die Benutzung des Reinigungsmittelbehälters bzw. der Reinigungsmittelkapsel 1 ist denkbar einfach: Der Reinigungsmittelbehälter wird in die Maschine wie eine Kaffeekapsel eingelegt und der Verschlussmechanismus wird betätigt. Beim Verschliessen wird die zweite Folie 3 durch eine Durchstossvorrichtung, z. B. ein Messer oder einen Dorn, oder ähnliches geöffnet. Anschliessend wird die Reinigung ausgelöst, beispielsweise durch das Drücken einer Spültaste, oder der Auslösung eines Getränkebezugs oder in einer weiterentwickelten Maschinenausführung durch Auslösung eines programmierten Reinigungsvorgangs. Dabei dringt Wasser durch die durchstossene Folie 3 in den Reinigungsmittelraum 4 des Behälters 1 ein und löst oder vermischt sich mit dem Reinigungsmittel 5. Die sich daraus bildende Reinigungsflüssigkeit kann zunächst aufgrund der geschlossenen ersten Folie 2 nicht entweichen. Allerdings ist der Pumpendruck des Kapselsystems so hoch, dass die erste Folie 2 ab einem bestimmten Überdruck reisst und die Reinigungsflüssigkeit aus dem Behälter 1 austritt und durch Öffnungen 6 im Gehäuse 7 des Behälters 1 den Innenraum der Behälteraufnahme bzw. der Kapselaufnahme flutet. Nach einer vorgegebenen Einwirkzeit, beispielsweise von 1 bis 2 Minuten, wird beispielsweise durch das erneute Drücken einer Spültaste, oder der Auslösung eines weiteren Getränkebezugs oder in einer weiterentwickelten Maschinenausführung durch Steuerung eines programmierten Reinigungsvorgangs eine grössere Wassermenge von beispielsweise 80 - 200 ml nachgespült, wodurch Reinigungsflüssigkeitsreste ausgespült werden. Der verbrauchte Reinigungsbehälter 1 bzw. Reinigungskapsel lässt sich durch Öffnen des Verschlussmechanismus wie eine normale Getränkekapsel auswerfen.

### Bezugszeichenliste:

- 1: Reinigungsmittelbehälter oder -kapsel
- 2: Verschlussmittel / Folie
- 3: Verschlussmittel / Folie
- 4: Reinigungsmittelraum
- 5: Reinigungsmittel
- 6: Öffnungen
- 7: Gehäuse

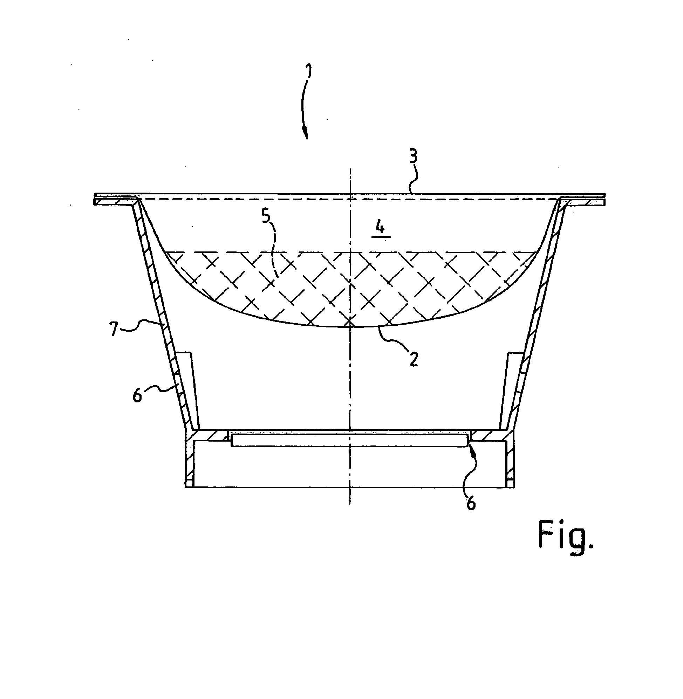

## Patentansprüche

1. Behälter (1), insbesondere Kapsel, für die Einbringung in den Aufnahmeraum für Einwegbehälter bzw. in die Kapselaufnahme einer Getränkemaschine, insb. einer Kaffeemaschine, in der Einwegbehälter oder Einwegverpackungen, insbesondere in Form einer Kapsel, mit Kaffee, Tee, Schokolade, Milch bzw. Milchpulver, Aromen, Konzentraten oder anderen Getränkegrundstoffen verwendet werden, wobei der Behälter ein Reinigungsmittel (5) zur Reinigung wenigstens eines Teils der Getränkemaschine beinhaltet, **dadurch gekennzeichnet, dass** das Reinigungsmittel zwischen einer ersten Folie (2) und einer mit dieser verbundenen, zweiten Folie (3) dicht eingeschlossen ist.

2. Behälter nach Anspruch 1, **dadurch gekennzeichnet, dass** das Reinigungsmittel zur Reinigung des Innenraums der Behälteraufnahme bzw. der Kapselaufnahme und/oder der Getränke-Ausgabekanäle der Getränkemaschine vorgesehen ist..

3. Behälter nach Anspruch 1 oder 2, **dadurch gekennzeichnet, dass** das Reinigungsmittel dicht und/oder flüssigkeitsdicht und/oder wasserdampfdicht im Behälter eingeschlossen ist..

4. Behälter nach einem der vorangehenden Ansprüche, **dadurch gekennzeichnet, dass** das Reinigungsmittel in einer tiefgezogenen Einstülpung innerhalb des Behälters dicht eingebracht ist.

5. Behälter nach einem der vorangehenden Ansprüche, **dadurch gekennzeichnet, dass** das Reinigungsmittel auf Seite des Wassereintritts in den Behälter mit einer planen Abdeckung eingeschlossen wird.

6. Behälter nach einem der vorangehenden Ansprüche, **dadurch gekennzeichnet, dass** er zum einmaligen Gebrauch für einen Reinigungsvorgang bestimmt ist.

7. Behälter nach Anspruch 4, **dadurch gekennzeichnet, dass** die tiefgezogene Einstülpung zur Aufnahme des Reinigers durch eine erste Folie (2) gebildet wird.

8. Behälter nach Anspruch 7, **dadurch gekennzeichnet, dass** die Abdeckung durch eine zweite Folie (3) gebildet wird.

9. Behälter nach Anspruch 8, **dadurch gekennzeichnet, dass** die Abdeckung so ausgebildet ist, dass sie von einer Durchstossvorrichtung der Getränkemaschine, z. B. einem Messer, einem Dorn oder ähnlichem, eingeschnitten oder eingedrückt werden kann.

10. Behälter nach Anspruch 7, **dadurch gekennzeichnet, dass** die erste Folie (2) so ausgebildet ist, dass sie unter Beaufschlagung eines bestimmten Überdrucks durch die Pumpe des Kapselsystems reisst.

11. Behälter nach Anspruch 7, **dadurch gekennzeichnet, dass** die erste Folie (2) Sollbruchstellen aufweist.

12. Behälter nach einem der vorangehenden Ansprüche, **dadurch gekennzeichnet, dass** der Behälter wenigstens drei radial angeordnete Löcher (6) und wenigstens ein axial angeordnetes Loch (6) für den Austritt von Reinigungsflüssigkeit aufweist.

13. Behälter nach einem der vorangehenden Ansprüche, **dadurch gekennzeichnet, dass** der effektive Lochdurchmesser eines Loches kleiner als 0.6 mm ist.

14. Behälter nach Anspruch 7, **dadurch gekennzeichnet, dass** in dem Behälter ein Hilfsmittel, beispielsweise Dorn, Messer und dergleichen, zur Öffnung der ersten Folie (2) durch deren Beaufschlagung mit Wasserdruck eingebracht ist.

15. Behälter nach Anspruch 7, **dadurch gekennzeichnet, dass** die erste Folie (2) überwiegend zum Boden und zu den Wänden des Behälters einen Abstand aufweist.

16. Behälter nach Anspruch 7, **dadurch gekennzeichnet, dass** die erste Folie (2) mindestens zu 80% ihrer Fläche berührungsfrei im Behälter eingebracht ist.

17. Behälter nach Anspruch 7 oder 8, **dadurch gekennzeichnet, dass** die erste Folie (2) und die zweite Folie (3) so ausgebildet sind, dass sie beim Verschlussvorgang der Kapselaufnahme einer Getränkemaschine durch eine Durchstossvorrichtung geöffnet werden können.

18. Verfahren zur Reinigung einer Getränkemaschine, insbesondere einer Getränkemaschine mit einem Aufnahmeraum für Einwegbehälter oder Einwegverpackungen, insbesondere in der Form von Kapseln, die Getränkegrundstoffe und/oder Getränkezusatzstoffe enthalten, wobei folgende Verfahrensschritte vorgesehen sind:
- Behälter mit Reinigungsmittel einlegen,
- Herstellen eines Zugangs zum Reinigungsmittel, z. B. mittels Öffnen eines Verschlussbereichs eines Reinigungsmittelaufnahmeraums, insbesondere durch Einschneiden und/oder Durchstechen eines folienartigen Verschlussmittels,
- Zuführen von Wasser, insbesondere heißem Wasser in den Reinigungsmittelaufnahmeraum,
**gekennzeichnet durch**:
- Zuführen des mit Reinigungsmittel versetzten Wassers zu den zu reinigenden Teilen der Getränkemaschine, insbesondere des Kapselaufnahmeraums aus am Aussendurchmesser des Behälters bzw. der Kapsel angebrachten Löchern (6),
- ggf. einwirken lassen,
- ausspülen.

## Claims

1. Container (1), in particular a capsule for insertion into the receiving space for disposable containers or in the capsule holder of a beverage machine, in particular a coffee machine, in which disposable containers or disposable packagings, particularly in the form of a capsule, containing coffee, tea, chocolate, milk, milk powder, aroma concentrates or other beverage bases are used, wherein the container includes a detergent (5) for cleaning at least a part of the beverage machine,
**characterized in that**
the detergent is sealed between a first foil (2) and a second foil (3) connected to it.

2. Container according to claim 1,
**characterized in that**
the detergent is provided for cleaning the interior of the container receptacle or the capsule holder and/or the beverage dispensing channels of the beverage machine.

3. Container according to claim 1 or 2,
**characterized in that**
the detergent is enclosed in the container tightly and/or liquid tightly and/or water vapor tightly.

4. Container according to one of the preceding claims,
**characterized in that**
the detergent is tightly introduced in a deep-drawn indentation inside the container.

5. Container according to one of the preceding claims,
**characterized in that**
the detergent is enclosed in the container by a planar cover on the side of the water inlet.

6. Container according to one of the preceding claims,
**characterized in that**
it is intended to be used for a cleaning process only once.

7. Container according to claim 4,
**characterized in that**
the deep-drawn indentation for receiving the cleaning agent is formed by a first foil (2).

8. Container according to claim 7,
**characterized in that**
the cover is formed by a second foil (3).

9. Container according to claim 8,
**characterized in that**
the cover is so designed that it may be cut or crushed by a piercing device of the beverage machine, e.g. a knife, a spike or the like.

10. Container according to claim 7,
**characterized in that**
the first foil (2) is so formed that it ruptures upon application of a certain overpressure through the pump of the capsule system.

11. Container according to claim 7,
**characterized in that**
the first foil (2) has predetermined breaking points.

12. Container according to one of the preceding claims,
**characterized in that**
the container has at least three radially arranged holes (6) and at least one axially arranged hole (6) for the discharge of the detergent.

13. Container according to one of the preceding claims,
**characterized in that**
the effective hole diameter of a hole is les than 0.6 mm.

14. Container according to claim 7,
**characterized in that**
the container comprises an auxiliary means, for example, a spike, a knife or the like, which is used to open the first foil (2) under the application of water pressure.

15. Container according to claim 7,
**characterized in that**
the first foil (2) is predominantly at a distance from the bottom and the walls of the container.

16. Container according to claim 7,
**characterized in that**
the first foil (2) is so applied that at least 80% of its surface is contact-free in the container.

17. Container according to claim 7 or 8,
**characterized in that**
the first foil (2) and the second foil (3) are so formed that they are opened by a piercing device during the closing operation of the capsule holder of a beverage machine.

18. Method for cleaning a beverage machine, in particular a beverage machine with a receiving space for disposable containers or disposable packagings, in particular in the form of capsules containing beverage bases and/or beverage additives, wherein the following method steps are provided:
- insertion of container with detergent,
- providing an access to the detergent, e.g. by opening a closure region of a detergent receiving space, in particular by cutting and/or piercing a foil-like closure means,
- supplying water, in particular hot water, into the detergent receiving chamber, **characterized by**:
- supplying the water admixed with detergent to the parts of the beverage machine to be cleaned, in particular the capsule holding space, from holes (6) provided at the outer diameter of the container or the capsule,
- allow to work, as necessary,
- rinse.

## Revendications

1. Récipient (1), plus particulièrement capsule, destiné à être introduit dans l'espace de logement pour récipients à usage unique ou dans le logement de capsule d'une machine à boissons, plus particulièrement une machine à café, dans laquelle des récipients à usage unique ou des emballages à usage unique, plus particulièrement sous la forme d'une capsule, avec du café, du thé, du chocolat, du lait ou de la poudre de lait, des arômes, des concentrés ou d'autres substances de base de boissons sont utilisés, le récipient contenant un produit de nettoyage (5) pour le nettoyage d'au moins une partie d'une machine à boissons, **caractérisé en ce que** le produit de nettoyage est inséré de manière étanche entre une première feuille (2) et une deuxième feuille (3), reliée à celle-ci.

2. Récipient selon la revendication 1, **caractérisé en ce que** le produit de nettoyage est prévu pour le nettoyage de l'intérieur du logement de récipient ou du logement de capsule et/ou des canaux de distribution de boissons de la machine à café.

3. Récipient selon la revendication 1 ou 2, **caractérisé en ce que** le produit de nettoyage est inséré de manière étanche et/ou étanche aux liquides et/ou étanche à la vapeur d'eau dans le récipient.

4. Récipient selon l'une des revendications précédentes, **caractérisé en ce que** le produit de nettoyage est introduit de manière étanche dans un profond emboutissage à l'intérieur du récipient.

5. Récipient selon l'une des revendications précédentes, **caractérisé en ce que** le produit de nettoyage est inséré du côté de l'admission d'eau dans le récipient avec un couvercle plat.

6. Récipient selon l'une des revendications précédentes, **caractérisé en ce qu'**il est conçu pour une utilisation unique pour un processus de nettoyage.

7. Récipient selon la revendication 4, **caractérisé en ce que** l'emboutissage est formé pour le logement du produit de nettoyage par une première feuille (2).

8. Récipient selon la revendication 7, **caractérisé en ce que** le couvercle est constitué par une deuxième feuille (3).

9. Récipient selon la revendication 8, **caractérisé en ce que** le couvercle est conçu de façon à ce qu'il puisse être découpé ou enfoncé par un dispositif de perçage de la machine à boissons, par exemple un couteau, une pointe ou autre.

10. Récipient selon la revendication 7, **caractérisé en ce que** la première feuille (2) est conçue de façon à ce qu'elle se déchire sous l'effet de l'application d'une surpression déterminée par la pompe du système de capsule.

11. Récipient selon la revendication 7, **caractérisé en ce que** la première feuille (2) comprend des points de rupture.

12. Récipient selon l'une des revendications précédentes, **caractérisé en ce que** le récipient comprend au moins trois trous (6) disposés radialement et au moins un trou (6) disposé axialement pour la sortie d'un liquide de nettoyage.

13. Récipient selon l'une des revendications précédentes, **caractérisé en ce que** le diamètre efficace d'un trou est inférieur à 0,6 mm.

14. Récipient selon la revendication 7, **caractérisé en ce que**, dans le récipient, est introduit un outil, par exemple une pointe, un couteau et autre, pour l'ouverture de la première feuille (2) grâce à sa sollicitation avec une pression d'eau.

15. Récipient selon la revendication 7, **caractérisé en ce que** la première feuille (2) présente principalement une distance par rapport au fond et aux parois du récipient.

16. Récipient selon la revendication 7, **caractérisé en ce que** la première feuille (2) est insérée, avec au moins 80 % de sa surface sans contact dans le récipient.

17. Récipient selon la revendication 7 ou 8, **caractérisé en ce que** la première feuille (2) et la deuxième feuille (3) sont conçues de façon à pouvoir être ouvertes par un dispositif de perçage lors du processus de fermeture du logement de capsule d'une machine à boissons.

18. Procédé de nettoyage d'une machine à boissons, plus particulièrement d'une machine à boissons avec un espace de logement pour récipients à usage unique ou des emballages à usage unique, plus particulièrement sous la forme de capsules, qui contiennent des substances de base de boissons et/ou des additifs de boissons, les étapes de procédé suivantes étant prévues :
- insertion du récipient avec produit de nettoyage,
- réalisation d'un accès au produit de nettoyage, par exemple par l'ouverture d'une zone d'obturation d'un espace de logement de produit de nettoyage, plus particulièrement par découpe et/ou perçage d'un moyen d'obturation sous la forme d'une feuille,
- introduction d'eau, plus particulièrement d'eau chaude, dans l'espace de logement du produit de nettoyage,
**caractérisé par** :
- l'introduction de l'eau avec du produit de nettoyage dans les parties à nettoyer de la machine à café, plus particulièrement de l'espace de logement de capsule, à partir de trous (6) réalisés au niveau du diamètre extérieur du récipient ou de la capsule,
- le cas échéant, laisser agir,
- rinçage.
